# EUROPEAN PATENT APPLICATION

(11) **EP 1 650 914 A2**
(43) Date of publication of application: **26.04.2006**
(21) Application number: 05270075.4
(22) Date of filing: 19.10.2005
(51) Int. Cl.: H04L 12/56

(54) **Method and apparatus for providing a scalable route reflector topology for networks**

(30) Priority: 19.10.2004 US 968299
(71) Applicant: AT&T Corp., New York, NY 10013-2412 (US)
(72) Inventor: Uttaro, James, Staten Island, New York 10312 (US)
(74) Representative: Harding, Richard Patrick

(57) **Abstract**

Method and apparatus for implementing a route reflector topology that comprises a plurality of sets of route reflectors. Each set of route reflectors establishes a peering relationship with all PEs (Provider Edges), e.g., Provider Edge Routers in the network. In one embodiment, each PER designates one set of route reflectors to propagate said PE's private routes, e.g., VPNv4 routes, to other PEs in the network. This designated set of route reflectors is responsible for both advertising locally originated routes from this PE to all other PEs and advertisement of routes from other PEs to this PE. Using this unique route reflector topology, new sets of route reflectors and PEs can be easily added into the network seamlessly.

## Description

The present invention relates generally to communication networks and, more particularly, to a method and apparatus for providing a scalable route reflector topology for networks servicing virtual private networks (VPNs).

### BACKGROUND OF THE INVENTION

Service providers, e.g., such as AT&T, have supported network based VPNs to facilitate the deployment of private network services over shared infrastructure(s). However, one of the key challenges in building a network that services VPNs is the ability to scale the number of private routes (e.g., VPNv4) and to provide enhanced reliability to VPN customers. There is a need to scale VPNv4 routes associated with VPN private services well past the requirements for traditional Managed Internet Service (MIS) services. Whereas the increase in Internet routes is linear, the increase in VPNv4 routes where each VPN customer contributes a unique set of routes will increase at a much faster rate. This places a much different requirement on the Border Gateway Protocol (BGP) protocol and associated route reflector topology for a network servicing VPNs as opposed to MIS. In the past, the BGP protocol has been primarily used at peering points between Internet Service Providers (ISPs) or between ISPs and large customers for Internet service. In general, the routes being propagated have been either assigned by the host ISP or some cooperating peer. There is a fundamental limit to these routes as defined by the growth of the Internet. Therefore the route reflector topology is relatively static and predictable in terms of how many routes need to be propagated.

As discussed above, one of the key challenges to scaling a network that is primarily focused on VPN customers is the sheer number of routes that need to be carried in the BGP control plane. All these routes need to be propagated from one PE (Provider Edge) to another PE, e.g., via a route reflector topology. For example, a network may utilize four (4) route reflectors split into two geographic clusters, e.g., with an east and a west cluster where each cluster services PEs in that geographic region. Each PE peers with both route reflectors in its geographic region for redundancy purposes. Unfortunately, this approach has all VPNv4 routes in all of the route reflectors. For example, a service provider such as AT&T may currently have a total number of VPNv4 routes in a domestic network that is approximately 300K. The total number of VPNs defined in the domestic network is about 850 with nearly 50K endpoints. The growth rate for VPN services has exceeded 100% and is expected to continue growing as customers migrate to this technology. With such explosive growth, the route reflector control plane must be scaled in a manner that accounts for PE reliability and provides simple methods to add more route reflector capacity.

Therefore a need exists for a method and apparatus for providing a scalable route reflector topology for networks servicing virtual private networks (VPNs), where the topology ensures PE reliability and provides a flexible approach for adding additional route reflector capacity.

### SUMMARY OF THE INVENTION

In one embodiment, the present invention discloses a route reflector topology that comprises a plurality of sets of route reflectors, e.g., where each set contains four route reflectors. The present invention is not limited by the number of route reflectors deployed in each set. Each set of route reflectors establishes a peering relationship with all PEs (Provider Edges) in the network. PE is broadly defined to include PERs (Provider Edge Routers), switches or any other communication devices located at the edge of the network. In one embodiment, each PER designates one set of route reflectors to propagate said PE's private routes, e.g., VPNv4 routes, to other PEs in the network. This designated set of route reflectors is responsible for both advertising locally originated routes from this PE to all other PEs and advertisement of routes from other PEs to this PE. Using this unique route reflector topology, new sets of route reflectors and PEs can be easily added into the network seamlessly. Furthermore, as the PEs are partitioned among multiple sets of route reflectors, there is increased reliability in the BGP control plane as no VPN will have all of its routes serviced by the same set of route reflectors.

### BRIEF DESCRIPTION OF THE DRAWINGS

The teaching of the present invention can be readily understood by considering the following detailed description in conjunction with the accompanying drawings, in which:

FIG. 1 illustrates a block diagram of a communication network or system having a route reflector topology of the present invention;

FIG. 2 illustrates a flowchart of a method for deploying route reflector topology of the present invention;

FIG. 3 illustrates a block diagram of a communication network or system having a route reflector topology of the present invention, where a new set of route reflectors is added to the network;

FIG. 4 illustrates a flowchart of a method for deploying route reflector topology of the present invention, where a new set of route reflectors is added to the network;

FIG. 5 illustrates a block diagram of a communication network or system having a route reflector topology of the present invention, where a new PE is added to the network;

FIG. 6 illustrates a flowchart of a method for deploying route reflector topology of the present invention, where a new PE is added to the network; and

FIG. 7 illustrates a high level block diagram of a general purpose computer suitable for use in performing the methods of the present invention.

To facilitate understanding, identical reference numerals have been used, where possible, to designate identical elements that are common to the figures.

### DETAILED DESCRIPTION

The present invention relates to data communication networks. These networks include, but are not limited to, a network of routers running a routing protocol, e.g., BGP protocol or a network supporting VPN services using BGP protocol. BGP is a protocol for facilitating communications between routers in different autonomous systems (ASs). An AS is a network or groups of networks under a shared technical administration and with common routing policies. BGP allows each AS to independently create its own routing polices and allows these independently created routing policies to override distance metrics when appropriate. To address this flexibility, BGP advertises routes for carrying data to the address space indicated by the IP prefix of the announced route. When a BGP router advertises to a neighbor that it has a path for reaching a specific IP prefix, the neighbor has a high degree of confidence that the advertising BGP router will actively use the specific path to reach the target destination. The popularity of BGP is due in part to its ability to distribute reachability information selecting the best route to each destination according to policies specified for each AS. Although the present invention is described below in the context of BGP which has become a de-facto standard, the present invention is not so limited. Namely, the present route reflector topology can be practiced with other routing protocols, and is not limited to BGP.

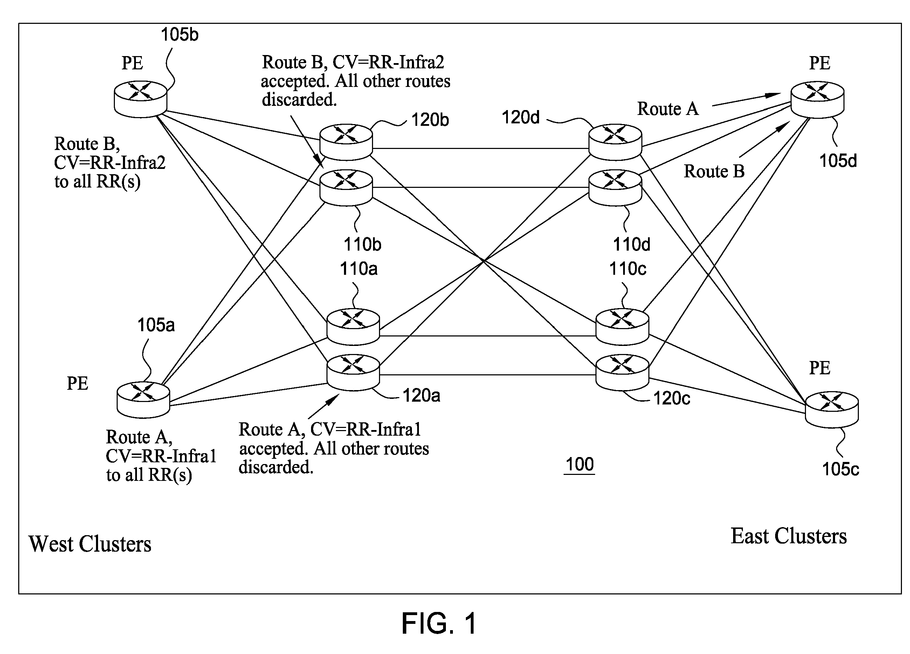

FIG. 1 illustrates a block diagram of an exemplary communication network or system 100 having a route reflector topology of the present invention. In one embodiment, the network 100 comprises a plurality of sets (e.g., 110a-d is one set and 120a-d is another set) of route reflectors (RRs) that are deployed in "parallel" sets of four. Parallel set is defined where each set of route reflectors contains the same number of route reflectors, e.g., four as shown in FIG. 1. However, although the present invention is described below as deploying parallel sets of route reflectors, those skilled in the art will realize that "unparallel" sets (e.g., sets with different number of route reflectors) can also be adapted into the present invention. Additionally, although the present exemplary embodiment shows four (4) route reflectors in one set, those skilled in the art will realize that each set of route reflectors may comprise more or less than four route reflectors.

A route reflector (RR) is known as a concentration router acting as a focal point for I-BGP sessions. Namely, a route reflector supports route re-advertisement between I-BGP neighbors to alleviate the need for a full mesh.

In one embodiment, the network 100 illustrates the four route reflectors split into two geographic clusters with an east (e.g., 110a-b and 120a-b) and a west cluster (e.g., 110c-d and 120c-d) where each cluster services relevant PEs 105a-d in that geographic region. Each PE peers with both route reflectors in its geographic region for redundancy purposes. It should be noted that PE is broadly defined to include PERs (Provider Edge Routers), switches or any other communication devices located at the edge of the network(s).

In one embodiment, each set of route reflectors establishes Multi Protocol-Internal Border Gateway Protocol (MP-IBGP) peering relationship with all PERs in the networks. It should be noted that IBGP refers to the protocol used to exchange routes within an AS. Each PER designates one set of route reflectors to propagate said PE's routes, e.g., VPNv4 routes to other PEs in the network 100. This designated set of route reflectors is responsible for both advertising locally originated routes from this PE to all other PEs and advertisement of routes from other PEs to this PE. Logical sets (e.g., 110a-d or 120a-d) of route reflectors are designated as RR[L], RR[L+1]... RR[L+N]. Each of these RR[L]s has an associated unique tag or an identification value (e.g., a Community Value (CV)) that is used to identify which PERs will be serviced by said RR[L].

To illustrate, on the neighbor relationships between a PER and all RR[L]s, VPNv4 routes advertised by a PER to the RR[L] that has the correct tag is accepted and propagated by the route reflectors in the RR[L] to all clients. If the tag does not match, then the route is discarded. Another approach is to limit the advertisement of routes from the PE such that it only advertises routes to the RR[L] that is responsible for propagation of this PE's routes. This mitigates the work that each route reflector needs to do as it does not need to process routes from PEs it is not responsible for in the transmit direction.

For example, PE 105a advertises Route A, where PE 105a has the community value of "RR-Infra1". Since the route reflector set comprising route reflectors 120a-d is tagged with community value of "RR-Infra1", this route reflectors set will accept the Route A announcement and is responsible for propagation of the routes of PE 105a, e.g., to PEs 105b-d. Similarly, since the route reflector set comprising route reflectors 110a-d is tagged with community value of "RR-Infra2", this route reflectors set will accept the Route B announcement and is responsible for propagation of the routes of PE 105b, e.g., to PEs 105a, c-d. However, route reflectors 120a-d will discard Route B announcement from PE 105b and route reflectors 110a-d will discard Route A announcement from PE 105a.

The present invention can be presented from the route reflector's perspective. For example, from the RR perspective, for a given set of { PE1, PE2,... PEi } a RR[L] set of route reflectors may have both T+R (transmit and receive) responsibility, a RR[L+1] set of route reflectors may have only T (transmit) responsibility. For a given set { PEj, PEk, ....PEn } the RR[L+1] set of route reflectors may have T+R responsibility while the RR[L] set of route reflectors may have only T responsibility. In this manner it becomes clear that RR[L] has to hold the routes from the set { PE1, PE2,... PEi } and propagate those routes to all other BGP peers but does not need to hold the routes for { PEj, PEk, ....PEn } as RR[L+1] will be doing that. In this manner, the VPNv4 set of routes across all customers is partitioned such that each RR[L] set of route reflectors may service some subset of PEs and therefore some subset of VPNv4 routes. This partitioning capability of the present route reflector topology greatly enhances reliability, since loss of a single route reflector in a cluster will not cause a complete outage. In other words, loss of a RR cluster will not completely isolate PEs in that region.

Namely, as the PEs are partitioned among multiple sets of RR[L]s. There is increased reliability in the BGP control plane as no VPN will have all of its routes serviced by the same RR[L]. This can be done by design or simply assumed as the number of PERs and VPN customers increase. This enhancement grows as the number of logical sets deployed increases. The redundancy of multiple route reflectors in a cluster and the spread of VPN customer routes across logical sets decrease the chances for a total customer outage by a factor of 1/n4 and what would have been a complete customer outage due to failure of a logical set is now a partial outage 1/n2 from a customer's point of view.

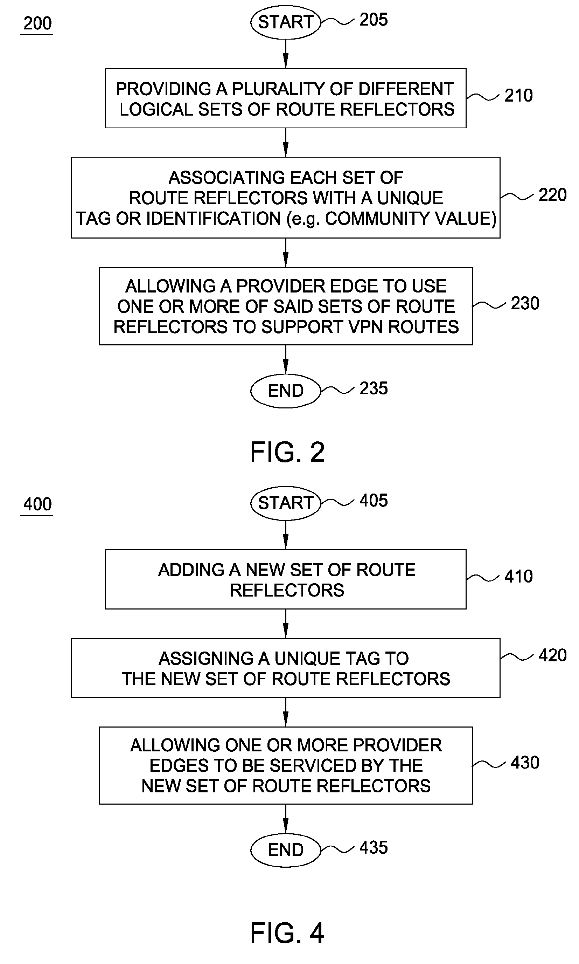

FIG. 2 illustrates a flowchart of a method 200 for deploying route reflector topology of the present invention. Method 200 starts in step 205 and proceeds to step 210.

In step 210, a network or AS provides or deploys a plurality of different logical sets of route reflectors, e.g., RR[L], RR[L+1]... RR[L+N]. The number of route reflectors in each set can be selected in accordance with deployment requirements.

In step 220, each set of route reflectors is associated with a unique tag or identification, e.g., a unique CV. Namely, the CV is assigned to the PE(s) that the corresponding logical set of route reflectors will service. This assignment can be performed one PE at a time or in groups of PEs.

In step 230, at least one PE is allowed to use one or more of said plurality of different logical sets of route reflectors to support VPN routes. The method ends in step 235. Thus, the effect of method 200 is that a PE may not advertise to a route reflectors set that is not responsible for propagating the PE's VPN routes and/or a RR within a route reflectors set that is not assigned to the PE will not service the propagation of the PE's routes, i.e., the VPN routes are discarded.

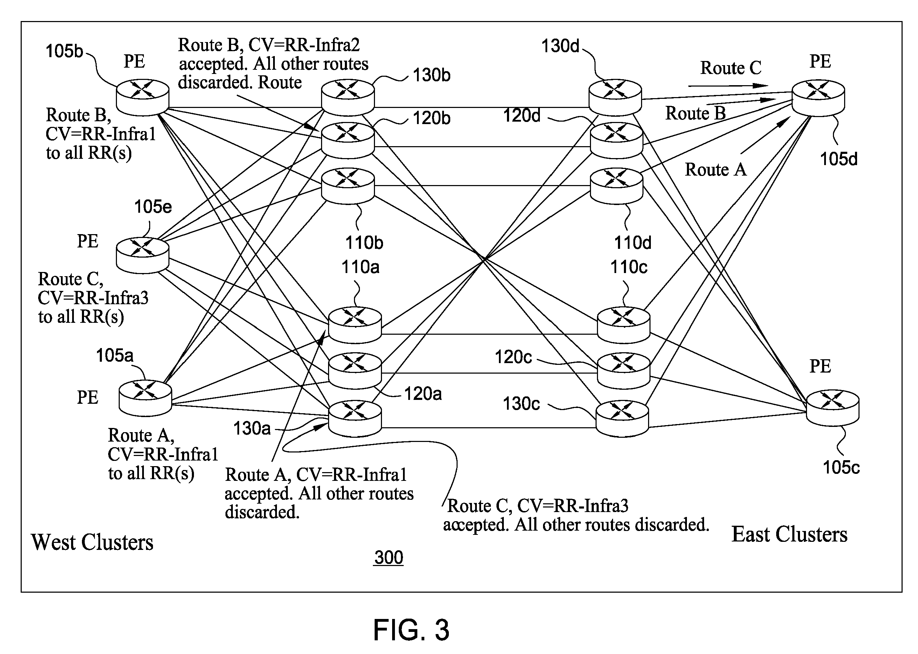

FIG. 3 illustrates a block diagram of a communication network or system 300 having a route reflector topology of the present invention, where a new set of route reflectors 130a-d is added to the network or system. It should be noted FIG. 3 is similar to FIG. 1 with the exception that FIG. 3 illustrates the addition of the new set of route reflectors 130a-d. As such, the description of FIG. 1 is equally applicable to FIG. 3.

In FIG. 3, it can be observed that adding the new parallel set of route reflectors 130a-d can be performed seamlessly, e.g., there is no need to disturb the existing sets of route reflectors 110a-d and 120a-d. Once the new parallel set of route reflectors 130a-d is deployed, it can be assigned a unique CV, where the CV can then be assigned to a PE, e.g., 105e, so that this newly added logical set of route reflectors will service the PE 105e. In one embodiment, the PE 105e can be an existing PE, where its CV has been changed from a previously assigned CV for the set of route reflectors 110a-d or 120a-d to the newly assigned CV associated with the new parallel set of route reflectors 130a-d. Alternatively, the PE 105e can be a newly deployed PE. In this manner, as the network continues to grow, additional route reflector logical sets are added and staged to be used by either new or migrated PEs. The simplicity of adding capacity is a driving factor in the management of the VPNv4 control plane. The design of the present invention provides a simple and efficient way to move PEs amongst RR[L]s and to add more RR[L]s to the existing topology.

As each PE peers with the route reflectors in each geographic region and with each RR[L] set, there already exists the required neighbor relationships. The key is that one of these neighbor relationships transmits locally originated routes for this PE while all others simply provide other PEs routes to this PE. All that needs to be done to move a PE to a different RR[L] set for T+R responsibility is to modify the neighbor relationship on the PE side. There is no configuration needed on any route reflector in any RR[L] set. This mitigates the number of routes on the original T+R RR[L] set by moving the T+R functionality to some RR[L+1] set. Adding route reflector capacity is simply adding another RR[L] set.

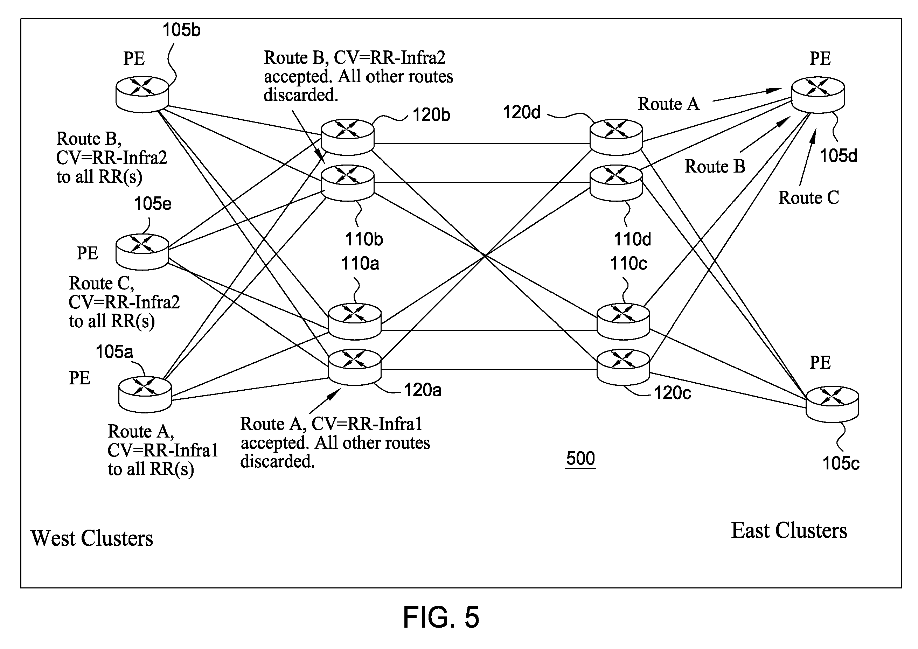

FIG. 4 illustrates a flowchart of a method 400 for deploying route reflector topology of the present invention, where a new set of route reflectors is added to the network. Method 400 starts in step 405 and proceeds to step 410.

In step 410, a network or AS provides or deploys a new logical set of route reflectors, e.g., RR[L+N+1]. The number of route reflectors in each set can be selected in accordance with deployment requirements, e.g., a parallel set of route reflectors can be deployed.

In step 420, the new set of route reflectors is associated with a unique tag or identification, e.g., a unique CV. Namely, the CV is used to assign the new logical set of route reflectors to the PE(s) that the corresponding new set of route reflectors will service. This assignment can be performed one PE at a time or in groups of PEs.

In step 430, one or more PEs are allowed to use the new set of route reflectors to support VPN routes. The method ends in step 435. Thus, the effect of method 400 is that additional route reflector logical sets can be easily added and staged to be used by either new or migrated PEs.

FIG. 5 illustrates a block diagram of a communication network or system 500 having a route reflector topology of the present invention, where a new PE 105e is added or migrated to the network or system. It should be noted FIG. 5 is similar to FIGs. 1 and 3 with the exception that FIG. 5 illustrates only the addition of a new PE 105e. As such, the descriptions of FIGs. 1 and 3 above are equally applicable to FIG. 5. FIG. 5 illustrates the flexible nature of the present invention that is capable of providing a simple and efficient way to move and/or add PEs amongst existing RR[L]s.

For example, PE 105a advertises Route A, where PE 105a has the community value of "RR-Infra1". Since the route reflector set comprising route reflectors 120a-d is tagged with community value of "RR-Infra1", this route reflectors set will accept the Route A announcement and is responsible for propagation of the routes of PE 105a, e.g., to PEs 105b-d. Similarly, since the route reflector set comprising route reflectors 110a-d is tagged with community value of "RR-Infra2", this route reflectors set will accept the Route B announcement and is responsible for propagation of the routes of PE 105b, e.g., to PEs 105a, c-d. When PE 105e is subsequently added, the community value of "RR-Infra2" is also assigned to PE 105e. As such, since the route reflector set comprising route reflectors 110a-d is tagged with community value of "RR-Infra2", this route reflectors set will also accept the Route C announcement from PE 105e and is responsible for propagation of the routes of PE 105e, e.g., to PEs 105a-d. However, route reflectors 120a-d will discard Route B and Route C announcements from PE 105b and 105e and route reflectors 110a-d will only discard Route A announcement from PE 105a.

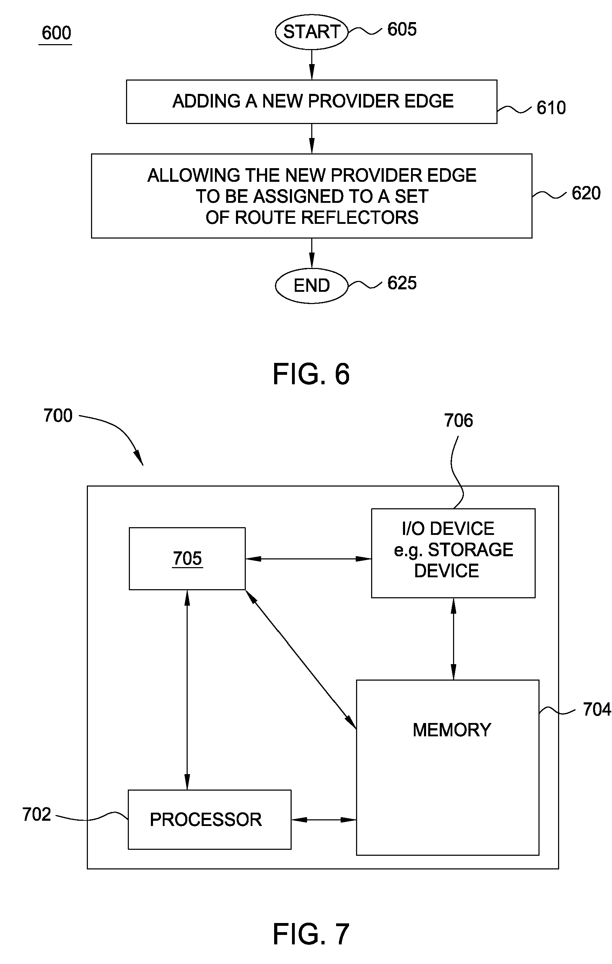

FIG. 6 illustrates a flowchart of a method 600 for deploying route reflector topology of the present invention, where at least one new PE is added to the network. Method 600 starts in step 605 and proceeds to step 610.

In step 610, a network or AS provides or deploys a new PE, e.g., 105e. It should be noted one or more PEs can be added or migrated to the network.

In step 620, the new PE is associated with a unique tag or identification, e.g., a unique CV. Namely, the CV is used to assign an existing set of route reflectors to the new PE(s). This assignment can be performed one PE at a time or in groups of PEs.

Method 600 ends in step 625. Thus, the effect of method 600 is that additional PEs can be easily added and serviced by existing sets of route reflectors.

The design of the present route reflector topology for a network servicing VPNs provides the ability to scale the VPNv4 control plane. Due to the unique requirements imposed by the large number of routes, the route reflector topology of the present invention is flexible in how PEs are serviced and expanded in response to ever increasing number of customer routes. The present invention describes a method that scales efficiently and provides the needed flexibility from a PE and RR perspective while gaining the added benefit of enhanced reliability for customers.

FIG. 7 depicts a high level block diagram of a general purpose computer suitable for use in performing the functions described herein. As depicted in FIG. 7, the system 700 comprises a processor element 702 (e.g., a CPU), a memory 704, e.g., random access memory (RAM) and/or read only memory (ROM), a route reflector topology module 705 for implement one or more methods (or steps within said methods) as disclosed above, and various input/output devices 706 (e.g., storage devices, including but not limited to, a tape drive, a floppy drive, a hard disk drive or a compact disk drive, a receiver, a transmitter, a speaker, a display, an output port, and a user input device (such as a keyboard, a keypad, a mouse, and the like)). In one embodiment, system 700 can be implemented as a route reflector or a PE as described above.

It should be noted that the present invention can be implemented in software and/or in a combination of software and hardware, e.g., using application specific integrated circuits (ASIC), a general purpose computer or any other hardware equivalents. In one embodiment, the present route reflector topology module 705 can be loaded into memory 704 and executed by processor 702 to implement the functions as discussed above. As such, the present route reflector topology module 705 (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for deploying a plurality of route reflectors in a communication network, said method comprising:
organizing said plurality of route reflectors into a plurality of sets of route reflectors; and
associating each set of said plurality of sets of route reflectors with at least one provider edge (PE).

2. The method of claim 1, wherein said associating comprises:
assigning a unique tag to each set of said plurality of sets of route reflectors; and
assigning said at least one PE to said unique tag.

3. The method of claim 2, further comprising:
propagating at least one virtual private network (VPN) route received from said at least one PE by one set of said plurality of sets of route reflectors if said unique tag assigned to said one set of said plurality of sets of route reflectors matches said unique tag assigned to said at least one PE.

4. The method of claim 2 or 3, wherein at least one virtual private network (VPN) route received from said at least one PE by one set of said plurality of sets of route reflectors is not propagated if said unique tag assigned to said one set of said plurality of sets of route reflectors does not match said unique tag assigned to said at least one PE.

5. The method of claim 3 or 4, wherein said at least one virtual private network (VPN) route is a VPNv4 route.

6. The method of any preceding claim, wherein said plurality of sets of route reflectors are parallel sets of route reflectors.

7. The method of any preceding claim, wherein said at least one PE is at least one provider edge router.

8. The method of any preceding claim, further comprising;
adding at least one new set of route reflectors; and
associating said at least one PE with said at least one new set of route reflectors.

9. The method of any preceding claim, further comprising;
adding at least one new PE; and
associating said at least one new PE with at least one of said plurality of sets of route reflectors.

10. The method of claim 2 or any one of claims 3 to 9 when appended directly or indirectly to claim 2, wherein said associating further comprises:
establishing a multi-protocol-internal border gateway protocol (MP-IBGP) peering relationship between at least one of said plurality of sets of route reflectors and said at least one PE.

11. A communication network, comprising:
a plurality of route reflectors organized into a plurality of sets of route reflectors; and
at least one provider edge (PE) associated with at least one set of said plurality of sets of route reflectors.

12. The communication network of claim 11, wherein said at least one PE is associated with said at least one set of said plurality of sets of route reflectors by assigning a unique tag to each set of said plurality of sets of route reflectors, and by assigning said at least one PE to said unique tag.

13. The communication network of claim 12, wherein said at least one set of said plurality of sets of route reflectors propagates at least one virtual private network (VPN) route received from said at least one PE, if said unique tag assigned to said at least one set of said plurality of sets of route reflectors matches said unique tag assigned to said at least one PE.

14. The communication network of claim 12 or 13, wherein at least one virtual private network (VPN) route received from said at least one PE by said at least one set of said plurality of sets of route reflectors is not propagated, if said unique tag assigned to said at least one set of said plurality of sets of route reflectors does not match said unique tag assigned to said at least one PE.

15. The communication network of any one of claims 11 to 14, wherein said at least one PE is at least one provider edge router.

16. A computer-readable medium having stored thereon a plurality of instructions, the plurality of instructions including instructions which, when executed by a processor, cause the processor to perform a method for deploying a plurality of route reflectors in a communication network, comprising:
organizing said plurality of route reflectors into a plurality of sets of route reflectors; and
associating each set of said plurality of sets of route reflectors with at least one provider edge (PE).

17. The computer-readable medium of claim 16, wherein said associating comprises:
assigning a unique tag to each set of said plurality of sets of route reflectors; and
assigning said at least one PE to said unique tag.

18. The computer-readable medium of claim 17, further comprising:
propagating at least one virtual private network (VPN) route received from said at least one PE by one set of said plurality of sets of route reflectors if said unique tag assigned to said one set of said plurality of sets of route reflectors matches said unique tag assigned to said at least one PE.

19. The computer-readable medium of claim 17 or 18, wherein at least one virtual private network (VPN) route received from said at least one PE by one set of said plurality of sets of route reflectors is not propagated if said unique tag assigned to said one set of said plurality of sets of route reflectors does not match said unique tag assigned to said at least one PE.

20. The computer-readable medium of any one of claims 16 to 19, further comprising;
adding at least one new set of route reflectors; and
associating said at least one PE with said at least one new set of route reflectors.
